(19)

Europäisches
Patentamt
European
Patent Office
Office européen
des brevets

(11) **EP 3 121 983 A1**

(12) **EUROPEAN PATENT APPLICATION**

(43) Date of publication:
**25.01.2017 Bulletin 2017/04**

(51) Int Cl.:
**H04L 1/18** *(2006.01)*     *H04L 1/00* *(2006.01)*

(21) Application number: **16162092.7**

(22) Date of filing: **23.03.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **24.07.2015 GB 201513122
30.10.2015 GB 201519185**

(71) Applicant: **FUJITSU LIMITED
Kawasaki-shi,
Kanagawa 211-8588 (JP)**

(72) Inventor: **MOULSLEY, Timothy
Caterham, Surrey CR3 5EE (GB)**

(74) Representative: **Stebbing, Timothy Charles
Haseltine Lake LLP
Lincoln House, 5th Floor
300 High Holborn
London WC1V 7JH (GB)**

(54) **CONTROL MESSAGES IN WIRELESS COMMUNICATION**

(57)     In LTE TDD with Carrier Aggregation (CA), a two bit sequence number or downlink assignment indicator (DAI) can be attached to downlink control information (DCI) messages relating to packets transmitted on some or all of successive carrier frequencies in a given subframe. The numerical progression of the sequence numbers can be used to determine the number of ACK/NACK bits (ACK/NACK codebook size) needed to acknowledge reception of the packets. The receiver determines the ACK/NACK codebook size to within a certain granularity or other constraints, depending on the received sequence of DAI values. The granularity or constraint(s) may be pre-determined, configured or indicated by the sequence. This allows a more accurate and reliable common understanding between the transmitter and receiver concerning the number of DCI messages transmitted. This is useful, for example, if the format of transmission of ACK/NACK information relating to the DCI messages depends on the number of messages transmitted, since the most likely cases of failed detection of a DCI message can be detected and corrected.

S100

Schedule DL for UE on multiple CCs

|

S102

Determine total number of DCI to send to UE

|

S104

Calculate sequence numbers for each DCI, based on

total number and granularity

|

S106

Attach sequence numbers to DCI and transmit to UE

FIGURE 4

## Description

### Field of the Invention

The present invention relates to wireless communication methods, for example in systems based on the 3GPP Long Term Evolution (LTE) and 3GPP LTE-A groups of standards, and more particularly to mechanisms by which terminals can be prevented from responding erroneously to control messages.

### Background of the Invention

Wireless communication systems are widely known in which base stations (BSs) form "cells" and communicate with terminals (also called user equipments (UEs) or mobile stations) within range of the BSs.

In such a system, each BS divides its available bandwidth, i.e. frequency and time resources in a given cell, into individual resource allocations for the user equipments which it serves. The UEs are generally mobile and therefore may move among the cells, prompting a need for handovers of radio communication links between the base stations of adjacent cells. A UE may be in range of (i.e. able to detect signals from) several cells at the same time. In the simplest case, using LTE as an example, the UE communicates with one "serving" or "primary" cell (PCell), relying exclusively on this PCell for time and frequency resources needed for wireless communication. However, to increase the resources available to the UE, it can be configured to communicate both with the PCell and with one or more secondary cells (Scells). The Scells may be provided at different carrier frequencies than the PCell, using carrier aggregation (see below).

When a UE starts to use a given cell for its communication, that cell is said to be "activated" for that UE, whether or not the cell is already in use by any other UEs. The set of cells which may be activated (or deactivated) for a UE is configured by the system. Normally, all the cells will need to be managed by a local controlling node (or by multiple such nodes in close co-operation), such as an enhanced NodeB (eNB) in LTE.

Carrier Aggregation (CA)

Techniques for increasing the resources available to UEs include so-called Carrier Aggregation (CA) which has been introduced into 3GPP since LTE Release 10 (incidentally, LTE Release 10 and higher are also referred to as LTE-Advanced, LTE-A). Details of CA as applied to LTE are given in the 3GPP standard TS36.300, hereby incorporated by reference. In CA, two or more Component Carriers (CCs) at different carrier frequencies are aggregated in order to support wider transmission bandwidths up to 100MHz (made up of a maximum of five CCs each having a bandwidth around their carrier frequency of up to 20MHz). A UE may simultaneously receive or transmit on one or multiple CCs depending on its capabilities. The terms "CC" and "carrier" are henceforth used interchangeably.

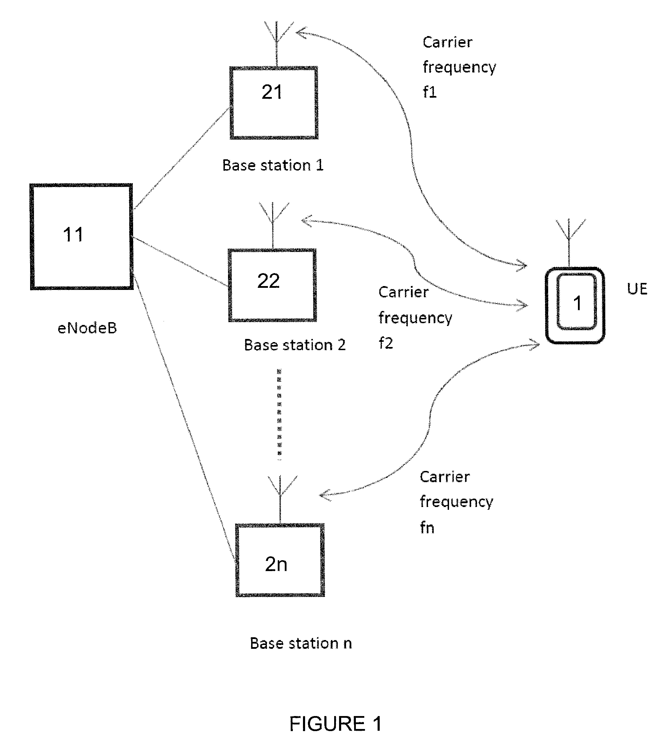

Figure 1 shows an example of a known LTE system (also applicable to the embodiments of the present invention to be described) in which a UE 1 uses carrier aggregation, with an eNB 11 controlling cells at carrier frequencies f1, f2......fn. In this case each cell is shown as supported by a different base station 21, 22, . . . 2n, with time division duplex (TDD) operation where uplinks and downlinks for each cell are at the same frequency. The base stations here are all controlled by one eNB. Other deployment options include the case where all the cells are supported by a single base station which may be co-located with, or included as part of, an eNB. Below, the term "base station equipment" is used to denote an eNB with or without separate base stations under its control, as well as the above mentioned single base station, and the equivalent apparatus in non-LTE systems.

Generally, one CC corresponds to one cell, and like a cell, each CC used for communication by a UE is "activated" for that UE. Scells may be activated or deactivated but the PCell may not be deactivated. As mentioned previously, it should be noted that there is a distinction between "activated" and "configured" CCs. A CC may be configured for a UE but is not necessarily activated at any given time. The number of activated CCs can be adapted to the demands of the UE, but only on timescales of tens or hundreds of subframes. Changes in the CCs configured for a UE occur on an even longer timescale.

In frequency division duplex (FDD) operation, the Pcell has a corresponding downlink carrier and an uplink carrier at different frequencies. These could be described as Downlink Primary Component Carrier (DL PCC) and Uplink Primary Component Carrier (UL PCC) respectively. An Scell has a downlink carrier and may also have an uplink carrier. Incidentally, although different carrier frequencies always imply different cells, the reverse is not necessarily the case: a single carrier frequency can support one or more cells.

Therefore, a UE using CA may have a plurality of serving cells, one for each CC, and as well as possibly having different carrier frequencies as illustrated in Figure 1, the cells may have different bandwidths. Generally, each cell is provided by base station antennas at a single site, but this does not exclude the possibility of one cell being provided by antennas at different sites.

Frame Structure

In a wireless communication system such as LTE, data for transmission on the downlink is organised in OFDMA frames each divided into a number of sub-frames. Various frame types are possible and differ between FDD and TDD for example. In a generic frame structure for LTE, a frame of duration 10 ms is divided into 20 equally sized slots of 0.5 ms. A sub-frame (or transmission time interval) consists of two consecutive slots, so one radio frame contains 10 sub-frames.

For each subframe, a new scheduling decision is taken regarding which UEs are assigned to which time/frequency resources during the subframe. Scheduling decisions are taken at the eNB, using a scheduling algorithm which takes into account the radio link quality situation of different UEs, the overall interference situation, Quality of Service requirements, service priorities, etc. The eNB notifies each UE of its scheduling decision by sending control messages including so-called downlink control information (DCI) as explained below.

Channels

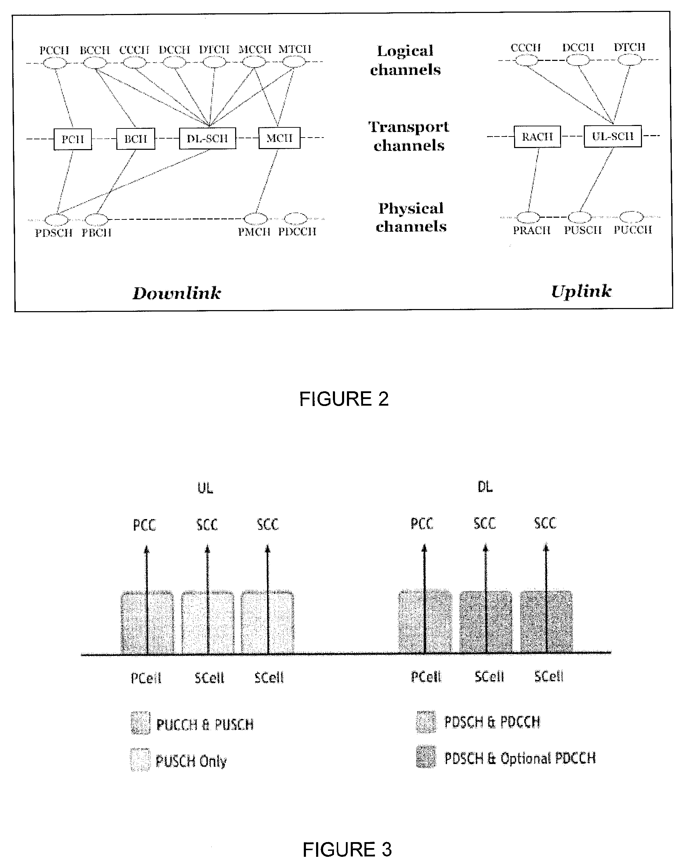

In LTE, several channels for data and control signalling are defined at various levels of abstraction within the system. Figure 2 shows some of the channels defined in LTE at each of a logical level, transport layer level and physical layer level, and the mappings between them. For present purposes, the channels at the physical layer level are of most interest.

On the downlink, user data is carried on the Physical Downlink Shared Channel (PDSCH). There are various control channels on the downlink, which carry signalling for various purposes including so-called Radio Resource Control (RRC), a protocol used as part of radio resource management, RRM. Higher layer signalling in the downlink, such as RRC, is typically carried on the PDSCH. Downlink physical layer signalling is carried by Physical Downlink Control Channel (PDCCH) or Enhanced PDCCH (EPDCCH) (see below).

Meanwhile, on the uplink, user data and also some signalling data is carried on the Physical Uplink Shared Channel (PUSCH). By means of frequency hopping on PUSCH, frequency diversity effects can be exploited and interference averaged out. The control channels include a Physical Uplink Control Channel, PUCCH, used to carry signalling from UEs including channel state information (CSI), as represented for example by channel quality indication (CQI) reports, and scheduling requests. If PUSCH transmission occurs when the PUCCH would otherwise be transmitted, the control information to be carried on PUCCH may be transmitted on PUSCH along with user data. Simultaneous transmission of PUCCH and PUSCH from the same UE may be supported if enabled by higher layers.

Generally speaking, the above mentioned channels may each be transmitted on a persubframe basis; that is they may occur in some or all subframes and may carry different signalling data in each subframe in which they are transmitted.

ACK/NACK and ACK/NACK codebook

Because transmissions between UE and base station are prone to transmission errors due to interference, a procedure is available for each packet sent in uplink and downlink direction to be acknowledged by the receiver. This is done by sending Hybrid Automatic Repeat Request (HARQ) acknowledgments or non-acknowledgments (ACK/NACK) on control channels. On the downlink, ACK/NACK is sent on a Physical HARQ Indicator Channel (PHICH). On the uplink ACK/NACK is sent on PUCCH (or may be sent on PUSCH along with user data). It will be noted that the purpose of the ACK/NACK is to inform the eNB whether each packet (transport block) has been received by the UE. Of course, reception of a packet usually also implies reception of the contents of the packet, including various control messages such as DCI. The conventional reporting procedure for ACK/NACK is defined in 3GPP TS36.213, also incorporated by reference. One concept of importance for understanding embodiments of the present invention is the "ACK/NACK codebook" (or equivalently "HARQ ACK" codebook). This term is used in 3GPP to refer to the number of information bits to be transmitted by the UE in the ACK/NACK reporting procedure, before channel coding is applied. In the simplest case, all information bits would be ACK/NACK bits (or equivalently HARQ ACK bits).

The ACK/NACK codebook can be regarded as a table in which each entry corresponds to a possible arrangement of ACKs and NACKs for the received data codewords. In a simple example with two data codewords transmitted/received, and all possible values of ACK/NACK allowed in combination, the "codebook" might look as follows:-

| ACK/NACK codebook entry | Acknowledgement for Data Codeword 1 | Acknowledgement for Data Codeword 2 |
|---|---|---|
| 1 | NACK | NACK |
| 2 | NACK | ACK |

(continued)

| ACK/NACK codebook entry | Acknowledgement for Data Codeword 1 | Acknowledgement for Data Codeword 2 |
| --- | --- | --- |
| 3 | ACK | NACK |
| 4 | ACK | ACK |

In the above example, the codebook "size" is the number of ACK/NACK bits (which happens to be the same as the number of data codewords).

PDCCH and DCI

In LTE, both the DL and UL are fully scheduled since the DL and UL traffic channels are dynamically shared channels. This means that PDCCH typically provides control messages including scheduling information to indicate which users should decode the physical DL shared channel (PDSCH) in each sub-frame and which users are allowed to transmit on the physical UL shared channel (PUSCH) in each sub-frame. In particular PDCCH is used to carry the above mentioned downlink control information (DCI) from eNBs to individual UEs. Conventionally, one PDCCH message (an example of a "control message" referred to later) contains one item of DCI (referred to below as "one DCI" for convenience). Each DCI refers to a specific CC activated for the UE, and the UE can determine which CC the DCI refers to either implicitly from the CC on which the DCI is sent, or explicitly by signalling bits within the DCI.

This DCI is often intended for one individual UE, but some messages are also broadcast (e.g. intended for multiple UEs within a cell). Thus PDCCH can also contain information intended for a group of UEs, such as Transmit Power Control (TPC) commands. In addition the PDCCH can be used to configure a semi-persistent schedule (SPS), where the same resources are available on a periodic basis. Below, the terms PDCCH, PDCCH message, DCI and DCI message are used interchangeably unless the context demands otherwise.

Thus, DCI is one important type of content of a "control message" referred to below. The term control message is used to denote control signalling to a UE whether carried on PDCCH or in other ways (e.g. via EPDCCH mentioned below, which has many similarities with PDCCH and for which much of the explanation on PDCCH also applies).

A cyclic redundancy check (CRC) is used for error detection of the DCI. The entire PDCCH payload (including any other bits such as padding) is used to calculate a set of CRC parity bits, which are then appended to the end of the PDCCH payload. As multiple PDCCHs relevant to different UEs can be present in one sub-frame, the CRC is also used to specify which UE a given PDCCH is relevant to. This is done by scrambling the CRC parity bits with a Radio Network Temporary Identifier (RNTI) of the UE. Various kinds of RNTI are defined in LTE. As one example, the C-RNTI is used by a given UE while it is in a particular cell, after it has successfully joined the network by performing a network access procedure with that cell.

Thus a UE could consider DCI message to have been successfully detected if the CRC for the corresponding PDCCH codeword is correct, taking into account scrambling by the appropriate RNTI. It should be noted that there may be additional methods for a UE to determine whether a DCI message has been correctly or incorrectly received, and correspondingly whether it should be considered as "detected" or otherwise. For example, if a DL assignment is received for a carrier which is not activated, this DCI should be considered as incorrectly received, and discard it. A given PDCCH may be transmitted in any one of a number of given locations (which is a search space comprising a predetermined subset of all the possible locations). The UE attempts blind decoding of the PDCCH in each possible location within the search space.

Each different type of message is conveyed using a different DCI format. Many PDCCH messages are each intended to be received by only one specific UE, others are intended for more than one UE. The size of the DCI depends on a number of factors, and thus it is necessary that the UE is aware of the size of the DCI, either by RRC configuration or by another means to signal the number of symbols occupied by PDCCH. Since, as already mentioned, multiple UEs can be scheduled within the same sub-frame, conventionally therefore multiple DCI messages are sent using multiple PDCCHs.

The format to be used depends on the purpose of the control message. For example, DCI format 1 is used for the assignment of a downlink shared channel resource when no spatial multiplexing is used (i.e. the scheduling information is provided for one code word transmitted using one spatial layer only). The information provided enables the UE to identify the resources, where to receive the PDSCH in that sub-frame, and how to decode it. This kind of DCI is referred to below as a "DL assignment" and is of particular relevance to the present invention. Besides the resource block assignment, this also includes information on the modulation and coding scheme and information relevant to the hybrid ARQ protocol used to manage retransmission of non-received data. Another type of DCI is an uplink grant, which gives the UE permission to transmit on the uplink using PUSCH.

EPDCCH

A new control channel design (EPDCCH) is provided in LTE-A, which transmits DCI messages using resources in a similar way to downlink data (i.e. like PDSCH). EPDCCH may be transmitted in either a frequency-localized or a frequency-distributed manner depending on the requirements of the system. Localized transmission would be appropriate if the channel /interference properties are frequency selective, in which case it may be possible to transmit DCI messages in a favourable location in the frequency domain for a given UE. In other cases, for example if no frequency selective channel information is available at the eNB, distributed transmission (corresponding to the manner of transmission of PDCCH) would be appropriate.

The design for distributed EPDCCH is in many respects similar to PDCCH i.e. some resources are configured for distributed EPDCCH, the UE has a blind decoding search space within those resources, and a given DCI message will use a set of resources with a given spread across the frequency domain.

Channels in CA

Having outlined some of the more important channels defined in LTE, their relationship to cells/CCs in the CA scenario can now be described using Figure 3.

As shown in Figure 3, the PCell (DL PCC) can transmit PDCCH to a UE. An SCell may (or may not) provide PDCCH to a UE on the corresponding DL SCC, depending on UE capabilities; however, uplink data on PUSCH can be transmitted by a UE having the required capabilities, on both PCell and SCell. Correspondingly there is a separate transport channel UL-SCH for each cell. For LTE up to and including Release 11 the uplink control channel (PUCCH) is only transmitted on the PCell (UL PCC). Similarly, PRACH for scheduling requests is only transmitted on the PCell. However, these restrictions may not apply in future Releases.

If an SCell is not configured to carry PDCCH for a UE, this implies that the scheduling information for that cell has to be carried in PDCCH of another cell (usually the PCell) - so called cross-carrier scheduling. The PCell and SCells should have identical or very similar transmission timing which allows, for example, PDCCH on one cell to schedule resources on a different cell, and ACK/NACKs for PDSCH transmissions on SCells to be sent on the PCell. SCells may have slightly different transmission timing at the UE in order to allow for the possibility that the cells are supported by antennas at different geographical sites. Because of the tight timing synchronization requirements between PUCCH on the PCell and PDSCH on the SCells, PCells and SCells can be assumed to be controlled by the same eNB.

Downlink Assignment Index (DAI)

CA can be configured for both FDD (where at least the Pcell has a downlink and uplink on different carrier frequencies, but an Scell may have only downlink or only uplink in use) and TDD (where uplink and downlink for an PCell, or Scell, are on the same carrier frequency). In LTE TDD the ACK/NACKs for codewords received in more than one subframe can be sent in the same uplink message (and thus within a single subframe). This means that there could be more ACK/NACKs to send in one subframe than the total number of bits available, which is fixed in accordance with the number of CCs configured for the UE.

In such cases, a so-called downlink assignment index (DAI) may be used for "bundling" of ACK/NACKS, where a given ACK/NACK bit is used to indicate correct reception (or otherwise) of multiple codewords, and thereby of any DCI (for example) contained in those codewords. By using a common ACK/NACK codebook, the UE and eNB have a shared understanding of how this bundling is performed, so that the eNB knows which transport blocks (and corresponding DCI) are being acknowledged by each bit. Conventionally, the bundling is performed in a manner allowing ACK/NACK for all configured CCs, regardless of which CCs are actually in use. It will be noted that for this bundling procedure to be useful, the probability of incorrect reception of data packets on PDSCH must be sufficiently low (e.g. 10% or less).

In TDD the DL assignments (DCI) for a CC typically contain a 2 bit DAI field (see 3GPP TS 36.213, section 7.3.2.1, TDD HARQ-ACK reporting procedure for same UL/DL configuration) which is incremented per successive DCI transmitted for that CC. This incrementing of the DAI helps the UE detect whether any DCIs have been missed (i.e. if the DAI field for a given DCI has been incremented by more than the expected amount compared with the previous DCI message for that carrier, then the UE can deduce that at least one intervening DCI message has been lost, or some other kind of error has occurred). If the UE detects a DCI with an out-of-order DAI, the UE knows that at least one DCI message has been lost, or a DCI message has been falsely detected; this enables the UE to discard the corresponding ACK/NACK transmission, which avoids the eNB mis-interpreting the ACK/NACK bundle, and is the behaviour currently specified in LTE. Alternatively the UE may be able to set the ACK/NACK bit(s) corresponding to missing DCI(s) to "NACK", even if one or more of the DL assignments has been lost. It will be noted that after bundling, each bit of the ACK/NACK refers to more than one transport block so that if one transport block is received in error (or the corresponding DCI missed), the corresponding bit should be set to NACK even if the other transport blocks have been received correctly.

In addition to being included in the DCI, DAI can also be conveyed in UL grants, which adds robustness.

In LTE FDD, currently there is no need to employ DAI because there is a one-to-one mapping between the subframe in which data is received and the subframe in which ACK/NACK are transmitted. However, if this restriction did not apply in future, DAI could also be applied for FDD in a similar way to TDD.

To summarise the above, in LTE-A two downlink control channels are defined (PDCCH and EPDCCH) which can be used to transmit control messages to UEs. Typically the control messages contain DCI (Downlink Control Information) and are used to indicate resources and other information concerning downlink data transmissions from the network on PDSCH ("DL assignments"), or uplink data transmissions which can be made by a UE on PUSCH. Usually one DCI is relevant for one UE, for one carrier frequency and for one subframe.

Typically the UE is configured, in every downlink subframe, to attempt reception of a number of different candidate messages which might be transmitted on a control channel, and usually each candidate would be associated with different control channel resources. The UE can detect correct reception of a message (codeword) by checking the CRC and confirming that it is the intended recipient by the presence of a particular identity indication (for example a specific value of CRNTI). If the UE detects an uplink grant contained in the message, it will make a corresponding transmission on PUSCH. If the UE detects a downlink assignment it will attempt to decode the corresponding downlink transmission on PDSCH, sending an ACK or NACK as appropriate, typically on the uplink control channel (PUCCH). In the case that PUSCH is transmitted on the uplink, the ACK/NACKs may be also sent on the PUSCH rather than the PUCCH.

In carrier aggregation (CA) multiple carriers at different frequencies may be configured for a terminal (via higher level RRC signalling), and these carriers may be activated or deactivated by higher layer MAC signalling. The UE may therefore be required to search for a set of control message candidates for each activated carrier. One carrier is permanently activated (the Primary Cell or PCell) and other configured carriers may be activated or deactivated (the secondary cells or SCells). In LTE the PCell and Scells are controlled by, and resources scheduled by, the same eNB. Using multiple input multiple output (MIMO) antenna techniques, spatial multiplexing can be used to send more than one data codeword to a UE using the same time/frequency resources. In LTE the multiple ACK/NACKs for multiple codewords received at the same time (same subframe) can be transmitted in the same uplink message, whether the codewords were sent by spatial multiplexing or on multiple carriers, or both.

In the case of multiple DL assignments indicating PDSCH transmissions in a given subframe, the UE will acknowledge reception by transmitting the corresponding ACK/NACKs on the PCell. The number of ACK/NACK bits generated per subframe is fixed according to the number of CCs configured and the maximum number of transport blocks (i.e. data codewords or packets) which may be received on each CC simultaneously. Currently in LTE the number of ACK/NACK bits transmitted using a given message format is not dependent on the number of CCs activated to the UE or the number of codewords received, although such possibilities have been considered by 3GPP.

Downlink control messages in LTE (such as those scheduling downlink transmissions), are considered to contain DCI (Downlink Control Information). DCI scheduling of the resources for a given carrier may be transmitted on the same carrier ("self-scheduling") or a different carrier "cross-carrier scheduling"). Note that in LTE there is a significant probability that the UE may miss DCI messages (i.e. fail to detect and decode a DCI message intended for the UE).

In LTE TDD the ACK/NACKs for codewords received in more than one subframe can be sent in the same uplink message. This means that there could be more ACK/NACKs to send in one subframe than the total number of bits available, corresponding to the number of transport blocks that could be sent on the activated or configured CCs. In such cases, so-called downlink assignment information (DAI) may be used for "bundling" of ACK/NACKs, where a given ACK/NACK bit is used to indicate correct reception (or otherwise) of multiple codewords.

For a two bit DAI field, operated as a counter incremented for each successive DCI, then up to three successive lost DCI messages can be correctly detected (that is, the fact that there are lost messages, and the number of lost messages up to three, can be determined). There is a known potential ambiguity if the last DCI in a sequence of DL assignments is lost, since this loss cannot be detected by observing the sequence of DCIs in the DL assignments (without additional information such as DAI in an UL grant). This is because the UE will only expect DCIs for activated CCs, but not every activated CC will have a DCI in every subframe (for example if there is temporarily a shortage of data for transmission to the UE).

3GPP RAN1 is currently discussing extensions to CA where the maximum number of carriers that are supported will be increased from 5 to 32.

For each CC on which PDSCH is transmitted to a UE, each DL assignment will be indicated by a corresponding DCI message. For a large number of CCs configured (i.e. more than 5) to avoid excessive transmission overhead, it is desirable that the number of ACK/NACK bits actually transmitted is based on the number of DCI messages containing DL assignments (i.e. number of CCs actually used) rather than the number of CCs configured to the UE (which is the current case for up to 5 CCs).

However, for the typically envisaged solutions for more than 5 CCs, in order that the eNB can correctly interpret the UE ACK/NACK transmission, it is preferable that both eNB and UE have the same understanding of the number of DCIs transmitted (which may be different from the number of DCIs detected by the UE). The design target for probability of loss of a DCI message is less than 1%, but in some cases it might be higher. So particularly when a large number of CCs are used in the DL for given UE, the probability that at least one of the corresponding DCI messages is lost in a given subframe may be quite significant. Since the ACK/NACK bits (at least for more than a small number of CCs) would be sent in a single message, if a DCI loss is undetected this is likely to result in incorrect reception or erroneous interpretation of many or all of the ACK/NACK bits. This in turn would lead to retransmission of transport blocks for which this is not required, or no re-transmission where it is required, even for CCs with correctly received DCIs, with a consequent impact on data throughput and system performance.

In addition to both eNB and UE knowing the number of ACK/NACK bits which are to be transmitted, it is also necessary that, after bundling, a bit indicating ACK is associated with one or more correctly received transport blocks (e.g. by the correct mapping to corresponding information bits in the ACK/NACK message). This means that as well as the number of missed DCIs, some information of the identity of missed DCIs is also needed at the UE.

Solutions proposed to date to the problem of achieving a common understanding between eNB and UE on the number and identity of ACK/NACK bits which should be transmitted include the following:-

* Use, as the basis of ACK/NACK reporting by the UE, the configured number of CCs (as is currently the case in LTE). This number can be changed by semi-static RRC signalling, but not quickly enough to adapt to fast changes in data rate, resulting from UE demands such as beginning to stream a video or the like.

* Use the number of activated CCs instead of the configured number of CCs. This can be changed more quickly than the number of configured CCs (using MAC signalling) but is still not fast enough to follow changes in data rate, which may vary significantly from one subframe to the next.

* Send the UE an explicit indication (e.g. the number of CCs and/or identities of CCs with DCI carrying DL assignments in a given subframe). This could be done using a special DCI message per subframe (e.g. with a bit-map of used CCs), at the cost of increased signalling overhead.

* Send the UE an explicit indication of the number of ACK/NACK bits to be sent and/or the message format to be used. This could be done using a special DCI message per subframe, which again increases the signalling overhead.

* Adapt the DAI mechanism as applied when transmitting ACK/NACKs from multiple subframes in a single subframe, and apply it directly to a sequence of DL assignments in the frequency domain in CA, to enable the UE to detect and take into account missed DCI messages when determining the number of ACK/NACK bits to be sent.

None of the above solutions is free of drawbacks. Consequently, there is a need to improve the existing DAI scheme for use in CA. More generally, there is a need to improve the ability of terminals to detect that one or more control messages within a sequence of control messages are missing and to notify a base station accordingly, and/or allow appropriate UE behaviour.

## Summary of the Invention

According to a first aspect of the present invention, there is provided a wireless communication method comprising, at a transmitter:

determining a number of control messages, the control messages meeting at least one criterion and for transmission in a sequence to a receiver;
associating a sequence number with each control message in the sequence, wherein the sequence number of at least one control message in the sequence depends on a constraint applied to the number of acknowledgements to be transmitted from the receiver following reception of one or more of said number of control channel messages; and
transmitting the determined number of control messages and the associated sequence numbers; and, at a receiver:

receiving one or more of said control messages and associated sequence numbers and
determining the number of acknowledgements to be transmitted corresponding to said received control messages, and
transmitting said determined number of acknowledgements from the receiver; wherein
said determining of the number of acknowledgements to be transmitted is in dependence on said sequence numbers and said constraint applied to the number of said acknowledgements to be transmitted.

Here, the "control messages" may also be referred to as control channel messages since they may be transmitted on a control channel such as PDCCH or EPDCCH in LTE.

By "meeting at least one criterion", the control messages have some common property and therefore can be considered together for purposes of the present invention, for example as control messages of a particular type such as downlink control information. The control messages will normally be ordered in some way, for example by being adjacent to one another, in terms of frequency and/or time. The sequence of control messages is transmitted to the receiver.

Here "associated with" means that sequence numbers are also transmitted to the receiver, usually but not necessarily (or not necessarily exclusively) by being attached to the control messages.

The "sequence number", by differing (taking a different value) between successive control messages, provides an indication of the position of a control message within the sequence.

The "constraint" limits the possible number of acknowledgements to one of a set of possible values, and one form of constraint corresponds to the "granularity" referred to below. In other words for this case the number of acknowledgements is "rounded up" based on the granularity, which means that the receiver and transmitter more reliably achieve the same understanding on the number of acknowledgements (number of ACK/NACK bits). An alternative way to consider such a constraint is as a maximum number of control messages in the sequence.

The "acknowledgements to be transmitted corresponding to said received control messages" may be ACK/NACKs directly in response to the control messages themselves. Alternatively the acknowledgements may result from decoding data scheduled by the control messages.

Preferably, the receiver is configured for wireless communication via a plurality of carriers (CCs) and each control message relates to a respective carrier.

Preferably, in said associating, the sequence numbers associated with successive control messages in the sequence are incremented by an amount which depends on the above mentioned constraint. In this way, the counting increment gives information about the codebook size. In some embodiments, the use of modulo arithmetic makes this condition equivalent to whether successive sequence numbers are incremented or decremented.

Preferably also, in said associating, the sequence number associated with successive control messages in the sequence is in dependence on the total number of control messages in the sequence.

The above mentioned constraint may be that the number of acknowledgements to be transmitted corresponds to the number control channels being a multiple of N, wherein N (the "granularity") is 2, 4 or 8.

The determining may comprise determining control messages which meet any one or more of the following criteria:

transmitted within a defined time window;
received within a defined time window;
for downlink scheduling;
transmitted with a particular message format;
transmitted via a particular channel.

In the case of the control messages being for downlink scheduling, and when wireless communication is scheduled within frames each consisting of a succession of subframes, the downlink scheduling preferably relates to the same subframe.

In any method as defined above, in each sequence, the successive control messages of each sequence may be successive in the frequency domain.

In one embodiment of the method, the above mentioned constraint is that the number of acknowledgements to be transmitted corresponds to the number of control messages being equal to A+BN, wherein A is 1,2,3 or 4, B is 2 or 4 and N is an integer greater than or equal to zero.

In an embodiment, the numerical progressions of the first and second sequence numbers are given by:

$$SQI(i) = f(i,c) \bmod n$$

where

SQI is a numerical value in the sequence numbers;
i identifies the control message in the sequence of control messages;
c is the total number of control messages in the sequence;
f(i,c) is a function of i and c; and

n is the number of different numerical values possible in the sequence numbers.

Any method as referred to above may further comprise, at the receiver:

receiving control messages and associated sequence numbers from the transmitter;
making a determination, on the basis of the sequence numbers, whether at least one control message in the sequence has been missed and how many control messages have been missed; and
notifying the determination to the transmitter.

In a further embodiment, the receiver replaces the above determining and transmitting steps by transmitting a specific acknowledgement message of one or two bits in the event that only one control message is received in the receiving step.

In a further embodiment, to reduce the probability of the receiver transmitting incorrect acknowledgement messages, no acknowledgement messages are sent if a number of missing control messages assumed or deduced by the receiver exceeds a threshold value. The threshold value may be predetermined, configured by signalling from the transmitter, implicitly determined by the number of configured or activated carriers (e.g. a higher threshold for a large number of carriers), implicitly determined by the number or proportion of successful acknowledgements (ACK), or implicitly determined by the number of control messages detected (e.g. a higher threshold for a larger number of detected control messages).

Any method as referred to above may be applied to an LTE-based wireless communication system. In this case the transmitter may be a base station and the receiver may be a terminal in the LTE-based wireless communication system; the control messages may be downlink control information (DCI), and the sequence numbers may be a downlink assignment index (DAI).

In particular, an embodiment of the present invention may be advantageously applied to LTE TDD. However, it may also conceivably be applied to LTE FDD or to mixed TDD/FDD implementations.

Embodiments of the present invention are based on the idea of transmitting a sequence of control messages, where the total number of control messages in the sequence is known in advance at the transmitter, and associating a sequence number from a plurality of possible sequence numbers with each of the sequence of control messages. Embodiments employ the concept of constraints on the size (e.g. in the form of "granularity") of the ACK/NACK codebook, or alternatively of the number of control messages. Note that the size of the ACK/NACK codebook may be practically equivalent under the assumption that each control message is associated with the same number of ACK/NACK bits. Such constraints or granularity mean that the ACK/NACK codebook size (number of control messages) can only be one of a predetermined number of fixed values (depending on the embodiment).

More particularly, in a system such as LTE a two bit sequence number or downlink assignment indicator (DAI) can be attached to downlink control information (DCI) messages relating to packets transmitted on some or all of successive carrier frequencies in a given subframe. This can used to determine the number of ACK/NACK bits (ACK/NACK codebook size) needed to acknowledge reception of the packets. According to embodiments of the invention, the receiver determines the ACK/NACK codebook size to within a certain granularity, depending on the received sequence of DAI values. The granularity may be pre-determined, configured or indicated by the sequence.

According to a second aspect of the present invention, there is provided a transmitter in a wireless communication system configured to:

determine a number of control messages, the control messages meeting at least one criterion and for transmission in a sequence to a receiver;
associate a sequence number with each control message in the sequence, wherein the sequence number of at least one control message in the sequence depends on a constraint applied to the number of acknowledgements to be transmitted from the receiver following reception of one or more of said number of control messages; and
transmit the determined number of control messages and the associated sequence numbers to the receiver.

According to a third aspect of the present invention, there is provided a receiver in a wireless communication system, configured to:

receive one or more of a number of control messages from a transmitter, wherein a sequence number is associated with each control message in the sequence and the sequence number of at least one control message in the sequence depends on a constraint applied to the number of acknowledgements to be transmitted from the receiver following reception of one or more of said number of control messages;
determine the number of acknowledgements to be transmitted corresponding to said received control messages, in dependence on said sequence numbers and said constraint applied to the number of said acknowledgements to be transmitted; and
transmit said determined number of acknowledgements.

According to a fourth aspect of the present invention, there is provided a wireless communication system comprising the above-defined transmitter and receiver.

A further aspect relates to software for allowing transceiver equipment equipped with a processor to provide a transmitter (e.g., base station) or a receiver (e.g., terminal) as defined above. Such software may be recorded on a computer-readable medium.

Thus, embodiments of the present invention may include one or more of the following features:

- Transmitting a sequence of control messages, where the total number of control message in the sequence is known in advance at the transmitter
- Where the sequence number is incremented or decremented to indicate an assumption the receiver should make about the number of transmitted control channel messages transmitted (or the corresponding number of acknowledgements to be transmitted).

As already mentioned, the above mentioned control messages may be downlink control information (DCI) messages relating to packets transmitted on some or all of activated carrier frequencies in a given subframe, and the sequence numbers in successive control messages may be a downlink assignment indicator (DAI). Thus, embodiments of the present invention involve, in a system such as LTE, attaching DAI in the form of, for example, a two bit sequence number to each of these DCI messages. A two bit DAI allows detection of the loss of any three successive DCI (not including the last DCI). A specific improvement over the prior art is that the loss of up to three of the last DCIs in the sequence can be detected and corrected without adding any more bits. This allows a more accurate and reliable common understanding between the transmitter (e.g., eNB) and receiver (e.g., UE) concerning the number of DCI messages transmitted and the corresponding ACK/NACK information. This is useful, for example, if the format of transmission of ACK/NACK information relating to the DCI messages depends on the number of messages transmitted, since the most likely cases of failed detection of a DCI message can be identified at the receiver, notified to the transmitter, and corrected.

In this way, when applied to DCI in LTE, the present invention allows a UE to make better use of received DCIs by improving the UE's knowledge of how many DCIs (and corresponding transport blocks) have been missed.

In general, and unless there is a clear intention to the contrary, features described with respect to one aspect of the invention may be applied equally and in any combination to any other aspect, even if such a combination is not explicitly mentioned or described herein.

As is evident from the foregoing, the present invention involves signal transmissions between a transmitter and receiver in a wireless communication system. Typically, but not necessarily exclusively, the transmitter is base station equipment and the receiver is a terminal. The term "base station equipment" refers to equipment providing or at least controlling one or more base stations, which can include for example the arrangement shown in Figure 1 with an eNB 11 controlling separate base stations 21 to 2n. It is envisaged that the base station equipment will usually take a form proposed for implementation in the 3GPP LTE and 3GPP LTE-A groups of standards, and may therefore include an eNB (which term also embraces Home eNB or HeNB) as appropriate in different situations. However, subject to the functional requirements of the invention, the base station equipment may take any other form suitable for transmitting signals to, and receiving signals from terminals.

Similarly, in the present invention, each terminal may take any form suitable for receiving signals from, and transmitting signals to, base station equipment. For example, the terminal may take the form of a subscriber station (SS), or a mobile station (MS), or any other suitable fixed-position or movable form. For the purpose of visualising the invention, it may be convenient to imagine the terminal as a mobile handset (and in many instances at least some of the terminals will comprise mobile handsets), however no limitation whatsoever is to be implied from this.

## Brief Description of the Drawings

Reference is made, by way of example only, to the accompanying drawings in which:

Figure 1 illustrates a wireless communication system employing carrier aggregation (CA);
Figure 2 illustrates channels at each of a plurality of protocol layers in LTE;
Figure 3 shows how LTE physical channels are allocated to a PCell and SCell;
Figure 4 is a flowchart of a process performed at a transmitter in embodiments of the present invention;
Figure 5 is a flowchart of a process performed at a receiver in embodiments of the present invention;
Figure 6 illustrates functional blocks of a terminal (UE) which may be employed in embodiments of the present invention; and

Figure 7 illustrates functional blocks of base station equipment (eNB) which may be employed in embodiments of the present invention.

## Detailed Description

To recap some of the most relevant features from the introduction, a UE can receive a DL assignment with respect to any CC activated for that UE. The DL assignment is conveyed to the UE by a DCI message. Each DCI is transmitted on PDCCH or EPDDCH, and indicates the presence of one or more transport blocks on PDSCH, transmitted via a specific CC. The UE sends ACK/NACK for each received transport block of which it is notified via a DCI message.

In the simplest case there would be one ACK/NACK bit per DCI (assuming each DCI schedules, on a respective carrier, one data codeword or transport block to be transmitted in the downlink via PDSCH to a given UE). Another case would be where there are two ACK/NACK bits per DCI, such as when MIMO is used and assuming each DCI schedules two downlink codewords. In principle a mixed case would be possible, where some DCIs in a subframe schedule one codeword to a UE and some DCIs schedule two codewords. In this case a simplification might be applied at the UE to transmit two ACK/NACK bits for every DCI. Thus, in many cases the ACK/NACK codebook size is directly proportional to the number of DCIs.

However, in LTE TDD "bundling" may be required to fit the ACK/NACKs of a plurality of subframes with respect to the same CC, within the available number of ACK/NACK bits that can be transmitted in one subframe. Bundling is typically applied if the number of codewords which need to be acknowledged in a given subframe exceeds the number of ACK/NACK bits. The bundling means that one ACK/NACK bit acknowledges more than one codeword (which all need to have been received correctly for the bit to be "ACK"). This case typically arises in TDD where codewords received at the UE in a number of DL subframes all need to be acknowledged in the same UL subframe (e.g. with asymmetrical DL/UL subframe allocation with more DL subframes than UL subframes).

Such bundling can also be applied to simplify the mixed case mentioned above, where some DCIs in a subframe schedule one codeword to a UE and some DCIs schedule two codewords. The UE would transmit one ACK/NACK bit for every DCI, and bundling is applied for DCIs scheduling two codewords (i.e. only 1 ACK/NACK bit for two codewords).

The ACK/NACKs to be sent in the case of bundling are partly governed by downlink assignment information (DAI) informed to the UE by the eNB. The existing DAI can be viewed as a sequence number for a single CC which is incremented in a subframe where a DL assignment is transmitted to the UE. The DAI value is included in the DCI.

Table 1: 2 bit DAI in LTE TDD

| Number of successive subframes covered by a given ACK/NACK message and with a DCI | Sequence of 2 bit DAI values (binary) | Sequence of 2 bit DAI values (decimal) | Most likely uncorrectable pattern of missed DCIs (where X indicates a missed DCI) | Approximate probability of occurrence of most likely uncorrectable pattern of missed DCIs |
|---|---|---|---|---|
| 4 | 00,01,10,11 | 0,1,2,3 | D,D,D,X | 0.01 |
| 5 | 00,01,10,11,00 | 0,1,2,3,0 | D,D,D,D,X | 0.01 |
| 6 | 00,01,10,11,00,01 | 0,1,2,3,0,1 | D,D,D,D,D,X | 0.01 |
| 7 | 00,01,10,11,00,01,10 | 0,1,2,3,0,1,2 | D,D,D,D,D,D,X | 0.01 |

As a an example, if in given a set of subframes the UE receives a sequence of DAI values [0,1,2,0,1] with respect to a given carrier, it can deduce that at least one DCI has been missed. The shortest possible transmitted sequence that could have been sent is [0,1,2,3,0,1]. In general the UE can detect and correct any sequences of up to 3 missed DCI in succession. A special case is where the last DCI of a sequence is missed (indicated by "X" in Table 1), and the UE would not be able to identify this. Note that the UE also knows the number of subframes that have elapsed and this information can help in the correction process, but for simplicity this aspect is not considered in the above example.

Assuming that the probability of a failing to detect a DCI message is fixed, and corresponds to some process which is uniform and uncorrelated between subframes and CCs, we can ascribe this a value such as $p=0.01$ as a typical design assumption. Then we can approximate the probability of occurrence of missing only the last DCI in a sequence as being approximately p also (as an illustration of this, for 4 subframes each with a DCI, the probability of three correct DCIs followed by one missed DCI would be $P = (1-p)(1-p)(1-p)p = 0.99 \times 0.99 \times 0.99 \times 0.01$ which is approximately 0.01).

This case is the uncorrectable pattern with the smallest number of missed DCI. All the other uncorrectable patterns contain more missed DCI and so are much less likely. Thus the probability that a given sequence of DCI has one or more missing DCI, and cannot be corrected is also about p (i.e. about 0.01).

Note that here we consider a pattern of missed DCI to be "correctable" if at least the correct number of DL assignments can be identified (even if it might not be possible to deduce exactly which assignments were lost). It will be understood that the missed DCI are correctable in the sense that the eNB can be notified of the problem, allowing the DCI in question to be retransmitted.

A mechanism to detect loss of the last DCI in a sequence is proposed in 3GPP R1-152569 HARQ-ACK transmission for up to 32 CCs, CATT, 3GPP TSG-RAN WG1 Meeting #81 Fukuoka, Japan, 25th - 29th May 2015.

An additional bit is added to the DAI field and set to "1" for the last DCI in a time-domain sequence (otherwise set to "0"). This solves the problem, but at the cost of an additional bit of overhead per DCI.

The invention is based on the recognition that in LTE CA the total number of DCIs transmitted to a UE on different CCs in a subframe is known at the transmitter. This information can be used to improve the robustness of the DAI scheme. In contrast, the number of packets to be transmitted in successive subframes in the time domain is not necessarily known in advance.

In the prior art the DAI value in a given DCI depends on the DAI in the previous DCI message.

In embodiments of this invention, the DAI value also depends on the total number of DCI messages in a sequence of DCI messages. Thus, in general the sequence of DAI values attached to successive DCIs in the frequency domain depends on the number of DCIs transmitted to the UE in that subframe.

Specific embodiments of the invention can be used to improve the reliability of the understanding between the transmitter and receiver of the number of DCIs transmitted, and the number of ACK/NACK payload bits to be transmitted by the receiver. As a particular example, for 2 bits of DAI, the ACK/NACK payload corresponds to the bits for a number of DCIs constrained to be a multiple of 4. Thus the granularity of the ACK/NACK payload size (or in other words, the codebook size) can be constrained to a particular value. As a further example the DAI values in a sequence may be incremented by an amount which indicates a constraint on, or the granularity of, the ACK/NACK codebook size (e.g. a multiple of 2 or 4) to the receiver.

For the general case the DAI value is given by

$$DAI(i) = f(i,c) \bmod n \qquad\qquad\qquad .........Eqn\ 1$$

where

   i identifies the DCI in the sequence of DCIs
   c is the total number of DCIs in the sequence
   f(i,c) is a function of i and c
   n is the number of different DAI values.

Note that here, whether DCIs are successive in the frequency domain refers to the resources (e.g. CCs) to which the DCI refer, which may or may not be the same as the frequency relationship of the transmitted DCI themselves. More generally, the ordering need not be in terms of frequency provide that the UE and eNB have a common understanding of the order.

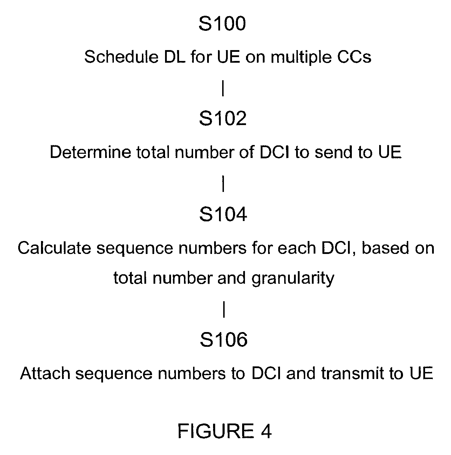

The basic process as performed at the transmitter (base station) is shown in Figure 4.

Step S100 is a step of scheduling the downlink for a given UE in a given subframe, using a plurality of CCs configured for the UE.

In S102 the base station determines how many DCI (control messages) in total are needed to inform the UE of the DL assignment.

S104 is to calculate sequence numbers for each DCI, based on the total number of DCI just determined and based on the constraint(s) or "granularity" as described below in various embodiments.

In step S106 the base station attaches the sequence numbers to DCI and transmits the resulting control messages to the UE. The process is repeated for the next subframe in which the base station has a DL assignment for the UE on any of the CCs.

Embodiments

The embodiments are based on LTE.

The receiver can use the received DAI values to determine the size of the ACK/NACK codebook constrained with a given granularity of X, i.e. the number of ACK/NACK bits corresponding to a number of DCIs is constrained to be a multiple of X. Here, typical values for X would be 2 or 4. Effectively, the number of ACK/NACK bits is rounded up to correspond to a multiple of X DCIs. According to an embodiment applied to a 2 bit DAI with X=4 (least for 4 or more DCIs) up to three successive DCIs can be missed before the transmitter and receiver would have a misunderstanding over the size of the ACK/NACK codebook.

It might be thought desirable to have an ACK/NACK codebook size always exactly corresponding to the number of scheduled DCIs (i.e. X=1), but this fine granularity may not always be useful in practice. For example, there may be a limited set of ACK/NACK payload sizes available for transmission. Therefore sacrificing some granularity for increased robustness may be acceptable.

Note that in LTE a DCI may schedule a transmission of 1 or 2 codewords, so with 1 ACK/NACK bit per codeword, the corresponding number of ACK/NACK bits may be 1 or 2. However, for the purpose of this invention we assume that the number of ACK/NACK bits per CC is known to both transmitter and receiver.

First embodiment

A first embodiment is based on LTE where a two bit DAI field is included in each DCI.

For a set of ordered carriers on which DCI is transmitted, the DAI is incremented for successive DCIs, starting with a pre-determined value such as zero. The receiver assumes that the ACK/NACK codebook size is a multiple of 2. The ACK/NACK codebook size corresponds to the number of ACK/NACK bits to be sent in acknowledgement of received DCIs (control channel messages) plus DCIs assumed by the receiver to have been transmitted but not received.

For this embodiment, in Eqn 1

$$f(i,c) = i$$

so DAI (i) = i mod n, where for example n =4 for a 2-bit DAI field.

The ordering of the set of carriers may be based on frequency, but this is not essential. Some examples of the DAI sequences for the first embodiment are shown in Table 2. It will be noted that, in contrast to Table 1 above, the case of DCIs for a set of carriers and not just one carrier is being considered here. Note that there is no restriction on the number of successive DCIs for which the invention may be applied.

Table 2: Improved 2 bit DAI for LTE CA (assuming codebook size is a multiple of two)

| Number of successive DCIs | Sequence of 2 bit DAI values (binary) | Sequence of 2 bit DAI values (decimal) | ACK/NACK codebook size (no of DCIs) | Main error case (leading to wrong codebook size) | Probability of the main error case |
|---|---|---|---|---|---|
| 1 | 00 | 0 | 2 | The DCI is missed | 0.01 |
| 2 | 00,01 | 0,1 | 2 | Both DCI's are missed | $10^{-4}$ |
| 3 | 00,01,10 | 0,1,2 | 4 | The last DCI is missed | 0.01 |
| 4 | 00,01,10,11 | 0,1,2,3 | 4 | The last two DCIs are missed | $10^{-4}$ |
| 5 | 00,01,10,11,00 | 0,1,2,3,0 | 6 | The last DCI is missed | 0.01 |
| 6 | 00,01,10,11,00,01 | 0,1,2,3,0,1 | 6 | The last two DCIs are missed | $10^{-4}$ |
| 7 | 00,01,10,11,00,01,10 | 0,1,2,3,0,1,2 | 8 | The last DCI is missed | 0.01 |

Table 2 shows the probability of the main error cases, and it can be seen that there is generally a significant improvement over the prior art result in Table 1. As already mentioned, the ACK/NACK codebook in terms of the number of ACK/NACK bits is equivalent to (proportional to) the number of DCIs. In a system such as LTE there may be one or two ACK/NACK bits per received DCI. In the Tables the ACK/NACK codebook size is expressed as the number of DCIs.

In Table 2 and the other Tables, error cases are included where no DCIs are received. In a system such as LTE this would result in no transmission of ACK/NACK bits, but we have included it here as special case of the "wrong codebook size".

In a variation of the first embodiment the receiver assumes that the ACK/NACK codebook size is a multiple of 4.

Table 3: Improved 2 bit DAI for LTE CA (assuming codebook size is a multiple of four)

| Number of successive DCIs | Sequence of 2 bit DAI values (binary) | Sequence of 2 bit DAI values (decimal) | ACK/NACK codebook size (no of DCIs) | Main error case (leading to wrong codebook size) | Probability of the main error case |
|---|---|---|---|---|---|
| 1 | 00 | 0 | 4 | The DCI is missed | 0.01 |
| 2 | 00,01 | 0,1 | 4 | Both DCI's are missed | $10^{-4}$ |
| 3 | 00,01,10 | 0,1,2 | 4 | All three DCIs are missed | $10^{-6}$ |
| 4 | 00,01,10,11 | 0,1,2,3 | 4 | All four DCIs are missed | $10^{-8}$ |
| 5 | 00,01,10,11,00 | 0,1,2,3,0 | 8 | The last DCI is missed | 0.01 |
| 6 | 00,01,10,11,00,01 | 0,1,2,3,0,1 | 8 | The last two DCIs are missed | $10^{-4}$ |
| 7 | 00,01,10,11,00,01,10 | 0,1,2,3,0,1,2 | 8 | The last three DCIs are missed | $10^{-6}$ |

Table 3 shows a further improvement compared with Table 2 but at the cost of coarser granularity in the codebook size.

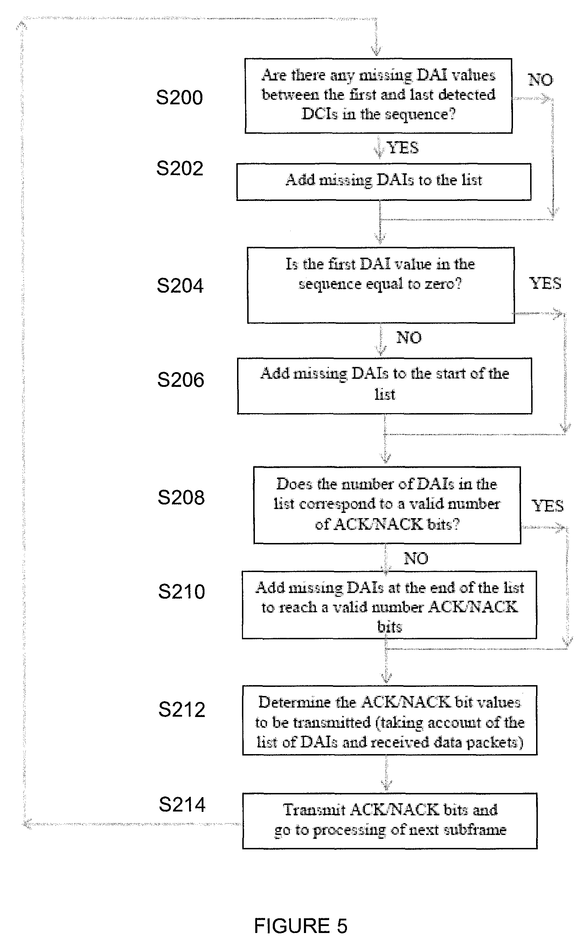

Figure 5 shows a flowchart of steps performed at the UE in this embodiment. In step S200, the UE receives the control messages from the base station in which DCI have sequence numbers attached in the form of the 2-bit DAI values, and obtains a list of DAI values from the corresponding detected DCIs. The UE checks whether any DAI values are missing from the sequence in the list, which the UE can judge by comparing the DAI values with the sequences in Table 2, for example. If no DAI value is found to be missing (S200, NO) the UE proceeds to step S204. If a missing DAI value is detected, in S202 the UE adds the missing DAI value or values to the list. In step S204 the UE checks whether the first DAI value in the sequence is equal to the correct value pre-determined, in this example, zero. If so (S204, YES) the flow proceeds to S208. Otherwise, (S204, "NO") this indicates that at least one DAI value is missing, and the missing value is added to the start of the list in S206. In step S208, the UE checks whether the number of DAIs in the resulting list corresponds to a valid number of ACK/NACK bits, bearing in mind the granularity referred to above. If the number of DAIs is a valid number (S208, "YES") the flow proceeds to S212. Otherwise, (S208, "NO"), the UE adds a DAI value at the end of the list of DAI values in step S210 before proceeding to S212. In step S212, the UE determines the ACK/NACK bit values to be transmitted, taking into account the detected DCIs (data packets actually received) and the list of DAI values (including the DAIs missing from the sequence, which correspond to non-received DCIs). In step 214, after any necessary coding of the ACK/NACK bits, the UE sends the appropriate ACK/NACKs to the eNB. The UE waits until a new set of ACK/NACKs need to be transmitted and the process then returns to the start.

It should be noted that in the above procedure, when missing values are added to the list they can be marked in some way so that the DAIs actually received can be distinguished from those which are detected as missing.

In a further variation of this embodiments (which may also be applied to the other embodiments), as a special case, if only one DCI is received a different transmission format for the ACK/NACK feedback may be used, which can carry just one or two bits.

Second embodiment

The second embodiment is like the first embodiment in that the DAI is incremented for successive DCIs; however, the starting value is zero when the number of DCIs is even and 1 when the number of DCIs is odd. The receiver assumes that the ACK/NACK codebook size is a multiple of two.

Table 4: Improved 2 bit DAI for LTE CA with codebook size a multiple of 2 and starting point of the sequence depending on the number of DCIs

| Number of successive DCIs | Sequence of 2 bit DAI values (binary) | Sequence of 2 bit DAI values (decimal) | ACK/NACK codebook size (no of DCIs) | Main error case (leading to wrong codebook size) | Probability of the main error case |
|---|---|---|---|---|---|
| 1 | 01 | 1 | 2 | The DCI is missed | 0.01 |
| 2 | 00,01 | 0,1 | 2 | Both DCI's are missed | $10^{-4}$ |
| 3 | 01,10,11 | 1,2,3 | 4 | The last two DCIs are missed | $10^{-4}$ |
| 4 | 00,01,10,11 | 0,1,2,3 | 4 | All four DCIs are missed | $10^{-8}$ |
| 5 | 01,10,11,00,01 | 1,2,3,0,1 | 6 | The last two DCIs are missed | $10^{-4}$ |
| 6 | 00,01,10,11,00,01 | 0,1,2,3,0,1 | 6 | The last two DCIs are missed | $10^{-4}$ |
| 7 | 01,10,11,00,01,10,11 | 1,2,3,0,1,2,3 | 8 | The first three DCIs are missed | $10^{-6}$ |

The provision of different starting points for the sequence depending on the number of DCIs provides a further improvement as shown in Table 4.

In a variation of the second embodiment the receiver assumes that the ACK/NACK codebook size is a multiple of four and the starting value DAI is zero except when the number of DCIs is 1 plus a multiple of four, when the starting value is 1.

Table 5: Improved 2 bit DAI for LTE CA with codebook size a multiple of 4 and starting point of the sequence depending on the number of DCIs

| Number of successive DCIs | Sequence of 2 bit DAI values (binary) | Sequence of 2 bit DAI values (decimal) | ACK/NACK codebook size (no of DCIs) | Main error case (leading to wrong codebook size) | Probability of the main error case |
|---|---|---|---|---|---|
| 1 | 01 | 1 | 4 | The DCI is missed | 0.01 |
| 2 | 00,01 | 0,1 | 4 | Both DCI's are missed | $10^{-8}$ |
| 3 | 00,01,10 | 0,1,2 | 4 | All three DCIs are missed | $10^{-6}$ |
| 4 | 00,01,10,11 | 0,1,2,3 | 4 | All four DCIs are missed | $10^{-8}$ |
| 5 | 01,10,11,00,01 | 1,2,3,0,1 | 8 | The last two DCIs are missed | $10^{-4}$ |
| 6 | 00,01,10,11,00,01 | 0,1,2,3,0,1 | 8 | The last two DCIs are missed | $10^{-4}$ |
| 7 | 00,01,10,11,00,01,10 | 0,1,2,3,0,1,2 | 8 | The last three DCIs are missed | $10^{-6}$ |

Third embodiment

The third embodiment is like the first embodiment except that from the UE perspective, the counting increment indicates information about the codebook size. In this example, the increment indicates whether the codebook size is a multiple of 2 (increment by 1 up) or 4 (increment by 3). In other words the progression in the sequence numbers indicates the granularity of the codebook size to the receiver. The pre-determined starting DAI value is zero.

As a special case with a 2 bit DAI, because of the mod 4 operation, a counting increment of 1 leads to "counting up" and a counting increment of 3 leads to "counting down".

Table 6: Improved 2 bit DAI for LTE CA with DAI counting increment indicating whether the codebook size is a multiple of 2 or 4

| Number of successive DCIs | Sequence of 2 bit DAI values (binary) | Sequence of 2 bit DAI values (decimal) | ACK/NACK codebook size (no of DCIs) | Main error case (leading to wrong codebook size) | Probability of the main error case |
|---|---|---|---|---|---|
| 1 | 00 | 0 | 2 | The DCI is missed | 0.01 |
| 2 | 00,01 | 0,1 | 2 | Both DCI's are missed | $10^{-4}$ |
| 3 | 00,11,10 | 0,3,2 | 4 | The last two DCIs are missed | $10^{-4}$ |
| 4 | 00,11,10,01 | 0,3,2,1 | 4 | The last three DCIs are missed | $10^{-6}$ |
| 5 | 00,01,10,11,00 | 0,1,2,3,0 | 6 | At least three DCIs are missed | $\sim 10^{-6}$ |
| 6 | 00,01,10,11,00,01 | 0,1,2,3,0,1 | 6 | At least four DCIs are missed | $\sim 10^{-8}$ |
| 7 | 00,11,10,01,00,11,10 | 0,3,2,1,0,3,2 | 8 | The last three DCIs are missed | $10^{-6}$ |

In a variation of the third embodiment with a 2 bit DAI the counting increment indicates whether the codebook size is a multiple of 4 (increment 1) or 8 (increment 3). The reliability of determining the codebook size is improved, at the cost of coarser granularity.

Table 7: Improved 2 bit DAI for LTE CA with DAI counting increment indicating whether the codebook size is a multiple of 4 or 8

| Number of successive DCIs | Sequence of 2 bit DAI values (binary) | Sequence of 2 bit DAI values (decimal) | ACK/NACK codebook size (no of DCIs) | Main error case (leading to wrong codebook size) | Probability of the main error case |
|---|---|---|---|---|---|
| 1 | 00 | 0 | 4 | The DCI is missed | 0.01 |
| 2 | 00,01 | 0,1 | 4 | Both DCI's are missed | $10^{-4}$ |
| 3 | 00,01,10 | 0,1,2 | 4 | All three DCIs are missed | $10^{-6}$ |
| 4 | 00,01,10,11 | 0,1,2,3 | 4 | All four DCIs are missed | $10^{-8}$ |
| 5 | 00,11,10,01,00 | 0,3,2,1,0 | 8 | At least three DCIs are missed | $\sim 10^{-6}$ |
| 6 | 00,11,10,01,00,11 | 0,3,2,1,0,3 | 8 | At least four DCIs are missed | $\sim 10^{-8}$ |
| 7 | 00,11,10,01,00,11,10 | 0,3,2,1,0,3,2 | 8 | At least four DCIs are missed | $\sim 10^{-8}$ |

In a further variation of the third embodiment with a 3 bit DAI the counting increment indicates the ACK/NACK codebook size as follows:-

Table 8: Counting increment indicates ACK/NACK codebook size

| Counting increment | Codebook size |
|---|---|
| 1 | 1+4N |
| 3 | 2+4N |
| 5 | 3+4N |
| 7 | 4+4N |

In Table 8, N is an integer {0,1,2,3.......} and the DAI value is modulo 8.

In order to better distinguish between potential error cases, the starting value of the DAI counter is set to the value of the counting increment.

The reliability of determining the codebook size is improved, with fine granularity, at the cost of an additional DAI bit.

Table 9: Improved 3 bit DAI for LTE CA with DAI counting increment indicating codebook size for 3 DAI bits

| Number of successive DCIs | Sequence of 3 bit DAI values (binary) | Sequence of 3 bit DAI values (decimal) | ACK/NACK codebook size (no of DCIs) | Main error case (leading to wrong codebook size) | Probability of the main error case |
|---|---|---|---|---|---|
| 1 | 001 | 1 | 1 | The DCI is missed | 0.01 |
| 2 | 011,110 | 3,6 | 2 | Both DCI's are missed | $10^{-4}$ |
| 3 | 101,010,111 | 5,2,7 | 3 | All three DCIs are missed | $10^{-6}$ |
| 4 | 111,110,101,100 | 7,6,5,4 | 4 | At least three DCIs are missed | $\sim 10^{-6}$ |
| 5 | 001,010,011,100,101 | 1,2,3,4,5 | 5 | At least four DCIs are missed | $\sim 10^{-8}$ |
| 6 | 011,110,001,100,111,010 | 3,6,1,4,7,2 | 6 | At least four DCIs are missed | $\sim 10^{-8}$ |
| 7 | 101,010,111,100,001,110,011 | 5,2,7,4,1,6,3 | 7 | At least four DCIs are missed | $\sim 10^{-8}$ |

The results in Table 9 show the best performance, along with achieving fine codebook granularity, and this is the preferred embodiment for a 3 bit DAI.

Fourth embodiment

The fourth embodiment is like the first embodiment except that an extra signalling bit indicates whether the ACK/NACK codebook size is a multiple of 2 or 4. Although the additional bit increases the overhead, there may be a benefit in terms of increased robustness.

Table 10: Improved 3 bit DAI for LTE CA with an extra DAI bit indicating whether the codebook size is a multiple of 2 or 4

| Number of successive DCIs | Sequence of 3 bit DAI values (binary) | Sequence of 3 bit DAI values (decimal) | ACK/NACK codebook size (no of DCIs) | Main error case (leading to wrong codebook size) | Probability of the main error case |
|---|---|---|---|---|---|
| 1 | 100 | 4 | 2 | The DCI is missed | 0.01 |
| 2 | 100,101 | 4,5 | 2 | Both DCI's are missed | $10^{-4}$ |
| 3 | 000,001,010 | 0,1,2 | 4 | All three DCIs are missed | $10^{-6}$ |
| 4 | 000,001,010,011 | 0,1,2,3 | 4 | All four DCIs are missed | $10^{-8}$ |
| 5 | 100,101,110,111,100 | 4,5,6,7,4 | 6 | The last three DCIs are missed | $10^{-6}$ |
| 6 | 100,101,110,111,100,101 | 4,5,6,7,4,5 | 6 | At least four DCIs are missed | $\sim 10^{-8}$ |
| 7 | 000,001,010,011,000,001,010 | 0,1,2,3,0,1,2 | 8 | At least four DCIs are missed | $\sim 10^{-8}$ |

In a variation of the fourth embodiment the extra signalling bit indicates whether the ACK/NACK codebook size is a multiple of 4 or 8. There is a further benefit in terms of increased robustness, at the cost of coarser granularity in the codebook size.

Table 11: Improved 3 bit DAI for LTE CA with an extra DAI bit indicating whether the codebook size is a multiple of 4 or 8

| Number of successive DCIs | Sequence of 3 bit DAI values (binary) | Sequence of 3 bit DAI values (decimal) | ACK/NACK codebook size (no of DCIs) | Main error case (leading to wrong codebook size) | Probability of the main error case |
|---|---|---|---|---|---|
| 1 | 000 | 0 | 4 | The DCI is missed | 0.01 |
| 2 | 000,001 | 0,1 | 4 | Both DCI's are missed | $10^{-4}$ |
| 3 | 000,001,010 | 0,1,2 | 4 | All three DCIs are missed | $10^{-6}$ |
| 4 | 000,001,010,011 | 0,1,2,3 | 4 | All the DCIs are missed | $10^{-8}$ |
| 5 | 100,101,110,111,100 | 4,5,6,7,4 | 8 | All the DCIs are missed | $10^{-10}$ |
| 6 | 100,101,110,111,100,101 | 4,5,6,7,4,5 | 8 | All the DCIs are missed | $10^{-12}$ |
| 7 | 100,101,110,111,100,101,110 | 4,5,6,7,4,5,6 | 8 | All the DCIs are missed | $10^{-14}$ |

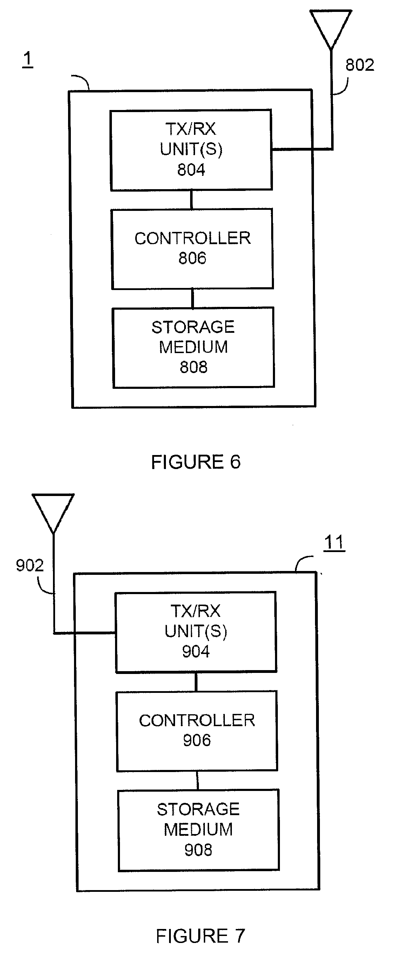

Figure 6 is a block diagram illustrating an example of a UE 1 to which the present invention may be applied. The UE 1 may include any type of device which may be used in a wireless communication system described above and may include cellular (or cell) phones (including smartphones), personal digital assistants (PDAs) with mobile communication capabilities, laptops or computer systems with mobile communication components, and/or any device that is operable to communicate wirelessly. The UE 1 includes transmitter/receiver unit(s) 804 connected to at least one antenna 802 (together defining a communication unit) and a controller 806 having access to memory in the form of a storage medium 808. The controller 806 may be, for example, a microprocessor, digital signal processor (DSP), application-specific integrated circuit (ASIC), field-programmable gate array (FPGA), or other logic circuitry programmed or otherwise configured to perform the various functions described above, for example to determine the ACK/NACK codebook size and detect and identify missing DAI values in the manner shown in Figure 5. For example, the various functions described above may be embodied in the form of a computer program stored in the storage medium 808 and executed by the controller 806. The transmission/reception unit 804 is arranged, under control of the controller 806, to receive control messages from the cells and send ACK/NACK and so forth as discussed previously.

Figure 7 is a block diagram illustrating an example of equipment suitable for use as an eNB 11 and at least one of the base stations 21, 22, ... 2n referred to above (and connected by high-speed backhaul to any other of the base stations). It includes transmitter/receiver unit(s) 904 connected to at least one antenna 902 (together defining a communication unit) and a controller 906. The controller may be, for example, a microprocessor, DSP, ASIC, FPGA, or other logic circuitry programmed or otherwise configured to perform the various functions described above, including scheduling a DL assignment for each UE and constructing DCI accordingly, including forming sequence numbers such as the DAI values shown in Tables 2 to 4. For example, the various functions described above may be embodied in the form of a computer program stored in the storage medium 908 and executed by the controller 906. The transmission/reception unit 904 is responsible for transmission of the control messages and so on under control of the controller 906. The controller 906 not only manages any integrated base station such as 21 in Figure 1 but also manages any separate base stations not directly controlled by the base station equipment.

Thus, to summarise, an embodiment of the present invention may provide that in a system such as LTE, a sequence number or downlink assignment indicator (DAI) can be attached to downlink control information (DCI) messages relating to packets transmitted on some or all of successive carrier frequencies in a given subframe. This can be used to determine the number of ACK/NACK bits (ACK/NACK codebook size) needed to acknowledge reception of the packets. The receiver determines the ACK/NACK codebook size to within a certain granularity or subject to other constraints, or in other words as one of a set of fixed sizes, depending on the received sequence of DAI values. The granularity or constraint(s) may be pre-determined, configured or indicated by the sequence.

The received sequence of DAI values can be used to detect at least some cases of false detection of DCI messages (e.g. when a DCI message is detected by the UE where none was transmitted). For example if a DCI is received with a DAI that does not fit in the sequence it can be rejected.

Various modifications are possible within the scope of the present invention.

As is clear from the fourth embodiment, the invention is not limited to DAI with 2 bits, and can be applied with more than two bits. Similarly the invention is not limited to the example cases or sequence lengths shown in Tables 2 to 4.

Whilst embodiments have been described with respect to DCI, this is not the only possibility. More generally the present invention can be applied to control messages of any particular type, in other words which share one or more criteria such as:

> transmitted within a defined time window;
> received within a defined time window;
> for downlink scheduling;
> transmitted with a particular message format;
> transmitted via a particular channel.

The invention as described is applied to control messages and incrementing a DAI value to count successive control messages. However, it can also be applied where a DAI value counts data codewords. This would be particularly relevant where the number of data codewords scheduled by a single DCI for a particular carrier can vary (e.g. either 1 or 2 codewords may be transmitted in the downlink, with a corresponding 1 or 2 ACK/NACK bits to be transmitted in the uplink).

In a system like LTE, when a large number of CCs are configured, there is a significant probability of false reception of a control channel message by a UE. Depending on the DAI value derived from a falsely detected control channel message scheduling a downlink data transmission, this could lead to an incorrect ACK/NACK codebook size being used by the UE. In order to reduce the probability of this occurring, some mitigation measures are desirable. For example, for a falsely detected DCI, the DAI value is unlikely to fit the DAI sequence progression expected by the UE. This would therefore be very likely to be interpreted as indicating the loss of several DCIs, leading to an assumed ACK/NACK codebook size which is too great, and a corresponding transmission of an incorrect number of ACK/NACK bits. This might lead to transmission of an incorrect ACK/NACK payload to the eNodeB, use of the wrong message format, or transmission in the wrong resources, causing interference. In order to reduce the probability of such events, the ACK/NACK transmission by the UE could be dropped if too large a number of missing DCIs is assumed or deduced by the UE (e.g. more than 2). The threshold on the number of missed DCIs before the ACK/NACK transmission is dropped could be:

- Predetermined
- Configured by signalling from the eNodeB
- Implicitly determined by the number of configured or activated CCs (e.g. a higher threshold for a large number of CCs)
- Implicitly determined by the number or proportion of ACK/NACK bits indicating ACK (e.g. if only a few bits would indicate ACK, then the threshold could be lower)
- Implicitly determined by the number of DCIs detected (e.g. a higher threshold for a larger number of detected DCIs)

A combination of the above could also be used to determine whether the ACK/NACK transmission is dropped.

Any of the embodiments and variations mentioned above may be combined in the same system. Whilst the above description has been made with respect to LTE and LTE-A, the present invention may have application to other kinds of wireless communication system also. Accordingly, references in the claims to "terminal" are intended to cover any kind of subscriber station, mobile device, MTC device and the like and are not restricted to the UE of LTE.

In any of the aspects or embodiments of the invention described above, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein.

A computer program embodying the invention may be stored on a computer-readable medium, or it may, for example, be in the form of a signal such as a downloadable data signal provided from an Internet website, or it may be in any other form.

It is to be understood that various changes and/or modifications may be made to the particular embodiments just described without departing from the scope of the claims.

## Industrial Applicability

In a wireless communication system where sequences of control messages such as DCI are sent between a transmitter and receiver, embodiments of the present invention allow with a 2-bit DAI for example, detection of the loss of any three successive DCI (not including the last DCI). A specific improvement over prior art is that the loss of up to three of the last DCIs in the sequence can be detected and corrected without adding any more bits. This allows a more accurate and reliable common understanding between the transmitter and receiver concerning the number of DCI messages transmitted and the corresponding ACK/NACK information. This is useful, for example, if the format of transmission of ACK/NACK information relating to the DCI messages depends on the number of messages transmitted, since the most likely cases of failed detection of a DCI message can be identified at the receiver.

## Claims

1. A wireless communication method comprising,
   at a transmitter:

   determining a number of control messages, the control messages meeting at least one criterion and for transmission in a sequence to a receiver;
   associating a sequence number with each control message in the sequence, wherein the sequence number of at least one control message in the sequence depends on a constraint applied to the number of acknowledgements to be transmitted from the receiver following reception of one or more of said number of control-messages; and
   transmitting the determined number of control messages and the associated sequence numbers; and,
   at a receiver:

   receiving one or more of said control messages and associated sequence numbers;
   determining the number of acknowledgements to be transmitted corresponding to said received control messages, wherein said determining of the number of acknowledgements to be transmitted is in dependence on said sequence numbers and said constraint applied to the number of said acknowledgements to be transmitted; and
   transmitting said determined number of acknowledgements.

2. The method according to claim 1 wherein the receiver is configured for wireless communication via a plurality of carriers and each control message relates to a respective carrier.

3. The method according to claim 1 or 2 wherein the at least one criterion employed in said determining comprises one or more of:

the control message is transmitted within a defined time window;
the control message is received within a defined time window;
the control message is for downlink scheduling;
the control message is transmitted with a particular message format;
the control message is transmitted via a particular channel.

4. The method according to claim 3 wherein wireless communication is scheduled within frames each consisting of a succession of subframes, and wherein the at least one criterion comprises that the control message is for downlink scheduling relating to the same subframe.

5. The method according to any preceding claim wherein the sequence number associated with successive control messages in the sequence is incremented by an amount in dependence on said constraint applied to the number of said acknowledgements.

6. The method according to any preceding claim wherein determining the number of acknowledgements to be transmitted is in dependence on said sequence numbers comprises distinguishing a numerical progression of said sequence numbers.

7. The method according to any preceding claim wherein, in said associating, the sequence number associated with successive control messages in the sequence is in dependence on the total number of control messages in the sequence.

8. The method according to any preceding claim wherein said constraint is that the number of acknowledgements to be transmitted corresponds to the number of control messages being a multiple of N, wherein N is 2, 4 or 8.

9. The method according to any preceding claim wherein said constraint is that the number of acknowledgements to be transmitted corresponds to the number of control messages being equal to A+BN, wherein A is 1,2,3 or 4, B is 2 or 4 and N is an integer greater than or equal to zero.

10. The method according to any preceding claim wherein the numerical progression of the sequence numbers is given by:

$$SQI(i) = f(i,c) \bmod n$$

where

SQI is a sequence number;
i identifies the control message in the sequence of control messages;
c is the determined number of control messages in the sequence;
f(i,c) is a function of i and c; and
n is the number of different possible sequence numbers.

11. The method according to any preceding claim further comprising, at the receiver:

receiving control messages and associated sequence numbers from the transmitter;
making a determination, on the basis of the sequence numbers, whether at least one control message in the sequence has been missed and how many control messages have been missed; and
notifying the determination to the transmitter.

12. The method according to any preceding claim wherein:

the wireless communication method is applied to an LTE-based wireless communication system;
the transmitter is a base station and the receiver is a terminal in the wireless communication system;
the control messages are downlink control information and the sequence number is a downlink assignment index.

13. A transmitter in a wireless communication system configured to:

determine a number of control messages, the control messages meeting at least one criterion and for transmission in a sequence to a receiver;
associate a sequence number with each control message in the sequence, wherein the sequence number of at least one control message in the sequence depends on a constraint applied to the number of acknowledgements to be transmitted from the receiver following reception of one or more of said number of control messages; and
transmit the determined number of control messages and the associated sequence numbers to the receiver.

14. A receiver in a wireless communication system, configured to:

receive one or more of a number of control messages from a transmitter, wherein a sequence number is associated with each control message in the sequence and the sequence number of at least one control message in the sequence depends on a constraint applied to the number of acknowledgements to be transmitted from the receiver following reception of one or more of said number of control messages;
determine the number of acknowledgements to be transmitted corresponding to said received control messages, in dependence on said sequence numbers and said constraint applied to the number of said acknowledgements to be transmitted; and
transmit said determined number of acknowledgements.

15. A wireless communication system comprising the transmitter according to claim 13 and the receiver according to claim 14.

FIGURE 1

FIGURE 2

FIGURE 3

S100

Schedule DL for UE on multiple CCs

|

S102

Determine total number of DCI to send to UE

|

S104

Calculate sequence numbers for each DCI, based on total number and granularity

|

S106

Attach sequence numbers to DCI and transmit to UE

FIGURE 4

S200 — Are there any missing DAI values between the first and last detected DCIs in the sequence? — NO

↓ YES

S202 — Add missing DAIs to the list

S204 — Is the first DAI value in the sequence equal to zero? — YES

↓ NO

S206 — Add missing DAIs to the start of the list

S208 — Does the number of DAIs in the list correspond to a valid number of ACK/NACK bits? — YES

↓ NO

S210 — Add missing DAIs at the end of the list to reach a valid number ACK/NACK bits

S212 — Determine the ACK/NACK bit values to be transmitted (taking account of the list of DAIs and received data packets)

S214 — Transmit ACK/NACK bits and go to processing of next subframe

FIGURE 5

1

TX/RX
UNIT(S)
804

CONTROLLER
806

STORAGE
MEDIUM
808

802

FIGURE 6

902

11

TX/RX
UNIT(S)
904

CONTROLLER
906

STORAGE
MEDIUM
908

FIGURE 7

Europäisches
Patentamt

European
Patent Office

Office européen
des brevets

# EUROPEAN SEARCH REPORT

Application Number

EP 16 16 2092

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | INTEL CORPORATION: "HARQ-ACK feedback for CA with up to 32 CCs", 3GPP DRAFT; R1-152625_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20150525 - 20150529 16 May 2015 (2015-05-16), XP050973842, Retrieved from the Internet: URL:http://www.3gpp.org/ftp/tsg_ran/WG1_RL 1/TSGR1_81/Docs/ [retrieved on 2015-05-16] | 1-7, 11-15 | INV. H04L1/18 ADD. H04L1/00 |
| A | * Chapter 2.1 "HARQ-ACK on PUCCH", "ACK/NACK payload size", lines 7-12 Chapter 2.2 "HARQ-ACK on PUSCH; figure 1 * | 8-10 | |
| X | EP 2 541 826 A2 (LG ELECTRONICS INC [KR]) 2 January 2013 (2013-01-02) | 1-7, 10-15 | |
| A | * paragraphs [0105] - [0108], [0111], [0114], [0121] - [0122], [0126], [0129], [0130]; figure 23 * * paragraphs [0148], [0159], [0165], [0172], [0174], [0187], [0190], [0194] * * paragraph [0209] * | 8,9 | **TECHNICAL FIELDS SEARCHED (IPC)** H04L |
| X | EP 2 709 299 A2 (LG ELECTRONICS INC [KR]) 19 March 2014 (2014-03-19) * paragraphs [0015], [0064], [0066], [0068], [0069], [0091] - [0093], [0095], [0110] * * paragraphs [0111] - [0113], [0117] - [0118] * | 1-15 | |

The present search report has been drawn up for all claims

| Place of search | Date of completion of the search | Examiner |
|---|---|---|
| The Hague | 27 September 2016 | Konstantopoulou, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 16 2092

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2016

| Patent document cited in search report | | Publication date | Patent family member(s) | | Publication date |
|---|---|---|---|---|---|
| EP 2541826 | A2 | 02-01-2013 | EP | 2541826 A2 | 02-01-2013 |
| | | | US | 2012314674 A1 | 13-12-2012 |
| | | | WO | 2011105769 A2 | 01-09-2011 |
| EP 2709299 | A2 | 19-03-2014 | CN | 103650393 A | 19-03-2014 |
| | | | EP | 2709299 A2 | 19-03-2014 |
| | | | EP | 3029865 A1 | 08-06-2016 |
| | | | ES | 2575393 T3 | 28-06-2016 |
| | | | JP | 5932974 B2 | 08-06-2016 |
| | | | JP | 2014519252 A | 07-08-2014 |
| | | | JP | 2016158286 A | 01-09-2016 |
| | | | KR | 20140034803 A | 20-03-2014 |
| | | | US | 2014105076 A1 | 17-04-2014 |
| | | | US | 2015063179 A1 | 05-03-2015 |
| | | | WO | 2012154013 A2 | 15-11-2012 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TSG-RAN WG1,* 29 May 2015